# EUROPEAN PATENT SPECIFICATION

(11) **EP 1 600 841 B1**
(45) Date of publication and mention of the grant of the patent: **19.11.2008**
(21) Application number: 04716730.9
(22) Date of filing: 03.03.2004
(51) Int. Cl.: G05D 7/06, F25B 41/06, B60H 1/32

(54) **FLOW RATE CONTROL VALVE**
DURCHFLUSSREGELVENTIL
VANNE DE RÉGULATION DU DÉBIT

(30) Priority: 06.03.2003 JP 2003059353
(43) Date of publication of application: 30.11.2005
(73) Proprietor: TGK CO., Ltd., Tokyo 193-0942 (JP)
(72) Inventor: HIROTA, H., TGK Co., Ltd., Hachioji-shi, Tokyo 193-0942 (JP)
(74) Representative: Grünecker, Kinkeldey, Stockmair & Schwanhäusser Anwaltssozietät
(86) International application number: PCT/JP2004/002673
(87) International publication number: WO 2004/079468

(56) References cited:
- EP-A2- 1 039 250
- JP-A- 6 346 983
- JP-A- 7 232 541
- JP-A- 2001 153 495
- JP-A- 2002 195 695
- US-A- 6 000 421
- PATENT ABSTRACTS OF JAPAN vol. 1999, no. 01, 29 January 1999 (1999-01-29) & JP 10 267471 A (TGK CO LTD), 9 October 1998 (1998-10-09)

## Description

This invention relates to an expansion device according to the preamble of claim 1.

When a refrigeration cycle(JP-A-2001-153495) for an automotive air conditioner uses a differential pressure control valve for controlling in the compressor either the differential pressure across the compressor or the suction pressure such that it remains substantially constant, it considered preferable to use an expansion device of a flow rate control type different in control method, so as to stabilize the controllability of the system.

The known flow rate control valve includes a constant flow-rate mechanism is configured based on a principle that if the cross-sectional area of a passage through which refrigerant flows between a refrigerant inlet and a refrigerant outlet and the differential pressure across the passage are determined, the flow rate of refrigerant flowing through the control valve can be controlled to be constant, and hence by varying one of the cross-sectional area and the differential pressure by the solenoid, it is possible to cause refrigerant to flow at a constant flow rate corresponding to a value set by the solenoid. The constant flow-rate mechanism includes a flow passage cross-sectional area control valve for controlling the cross-sectional area of the passage, and a constant differential pressure control valve for controlling the differential pressure between the inlet and the outlet of the flow passage cross-sectional area control valve to be substantially constant, and is configured such that the flow passage cross-sectional area of the flow passage cross-sectional area control valve is controlled by the solenoid, to thereby hold a predetermined constant flow rate of refrigerant flowing through the flow rate control valve corresponding to a flow passage cross-sectional area set by the solenoid. Alternatively, the constant flow-rate mechanism includes a restriction passage of fixed size, and a differential pressure control valve for controlling the differential pressure between the inlet and the outlet of the restriction passage such that it is substantially constant, and is configured such that a differential pressure value set to the differential pressure control valve is controlled by the solenoid to thereby hold a predetermined constant flow rate of refrigerant flowing through the flow rate control valve corresponding to the differential pressure set by the solenoid. However the conventional flow rate control valve includes the restriction passage for creating the differential pressure, and the differential pressure control valve for controlling the differential pressure across the restriction passage such that it is constant, and hence is complicated in construction.

JP 07 232541 A relates to a hot water circulating type heating apparatus comprising a solenoid proportional valve for accurately controlling and varying the flow rate of hot water. The solenoid coil is supplied with a pulse current to control the flow rate by the pulse width. A valve element and a pressure-sensing member being integral with the valve element have equal pressure effective areas. A spring loaded overflow valve is provided between an inlet channel and an outlet channel of the flow regulating valve.

It is an object of the present invention to provide an expansion device with a flow rate control valve of a constant flow-rate control type, which is simple in construction.

This object is achieved with the features of claim 1.

By regarding the evaporator as a restriction passage for control actions, the control valve controls the pressure loss caused by the passage of refrigerant through the evaporator to be constant, whereby it is possible to cause refrigerant to flow into the evaporator at a substantially constant flow rate. This makes it unnecessary to form a restriction passage in the flow rate control valve, and hence the construction of the flow rate control valve can be simplified, which makes it possible to provide a flow rate control valve manufactured at low cost. When the solenoid is de-energised the flow rate control valve is brought and held in the fully closed state, avoiding further refrigerant being delivered to and accumulated in the evaporator even when the compressor continues to discharge compressed refrigerant.

### Brief Description of Drawings

FIG. 1 is a central longitudinal cross-sectional view of the construction of a flow rate control valve according to a first embodiment.
FIG. 2 is a central longitudinal cross-sectional view of the construction of a flow rate control valve according to a second embodiment.
FIG. 3 is an expanded cross-sectional view showing essential components of the flow rate control valve according to the second embodiment.
FIG. 4 is a central longitudinal cross-sectional view of the construction of a flow rate control valve according to a third embodiment of the present invention.
FIG. 5 is a central longitudinal cross-sectional view of the construction of a flow rate control valve according to a fourth embodiment of the present invention.

### Best Mode for Carrying Out the Invention

Hereinafter, embodiments of the present invention will be described in detail with reference to the drawings.

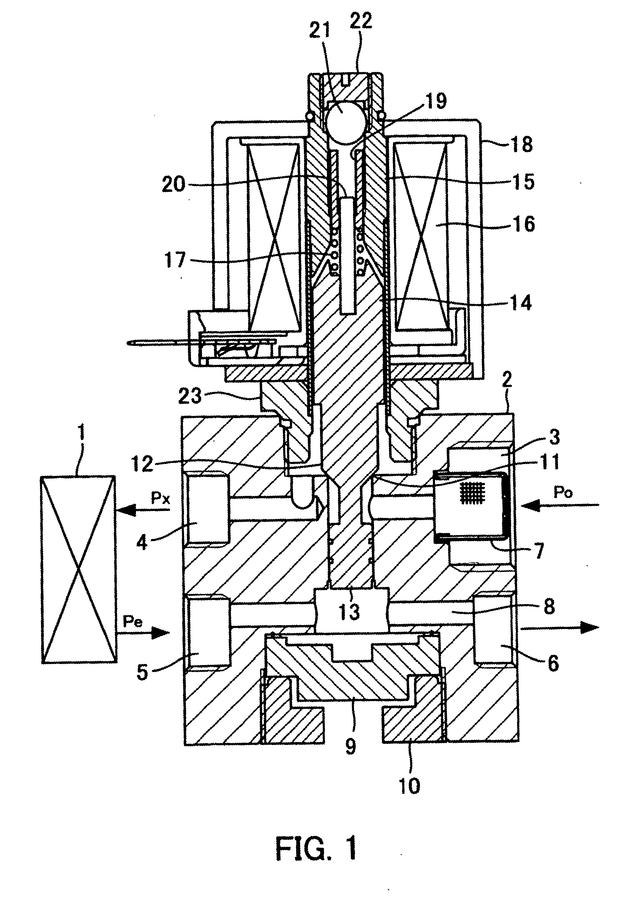

FIG. 1 is a central longitudinal cross-sectional view of the construction of a flow rate control valve according to a first embodiment of the present invention.

The flow rate control valve is capable of performing constant flow rate control only after it is connected to an evaporator 1, and has a body block 2 provided with a high-pressure refrigerant inlet 3 to which refrigerant at pressure Po is supplied, a low-pressure refrigerant outlet 4 from which refrigerant is delivered to the evaporator 1 while being expanded, a return refrigerant inlet 5 to which refrigerant is returned from the evaporator 1, and a return refrigerant outlet 6 from which the returned refrigerant is delivered to a compressor. The high-pressure refrigerant inlet 3 has a strainer 7 disposed therein in a manner closing a passage formed therein.

The body block 2 has an upper portion thereof formed with a large-diameter hole, a central portion thereof formed with a cylinder concentric with the large-diameter hole and extending vertically, as viewed in FIG. 1, and a lower portion thereof formed with a hole that communicates with the cylinder formed in the central portion thereof. The hole in the lower portion of the body block 2 is communicated with the return refrigerant inlet 5 and the return refrigerant outlet 6, by a return passage 8, and an opening of the hole formed downward of the return passage 8 is closed by a packing pressed against the body block 2 by a screw 10 via a packing retainer 9.

The rim of an upper end of the cylinder formed in the central portion of the body block 2 forms a valve seat 11, and a valve element 12 is disposed in a manner opposed to the valve seat 11 from above, as viewed in FIG. 1, such that the valve element 12 can move to and away from the valve seat 11. The valve element 12 is integrally formed with a piston 13, which serves as a pressure-sensing member axially movably disposed within the cylinder, with a small-diameter shaft connecting between the valve element 12 and the piston 13. In the cylinder, a refrigerant passage communicating with the high-pressure refrigerant inlet 3 opens in a portion where the small-diameter shaft is located. A chamber above the cylinder, formed by the large-diameter hole formed in the upper portion of the body block 2, is communicated with the low-pressure refrigerant outlet 4 via a refrigerant passage.

Disposed on the top of the body block 2 is a solenoid which comprises a plunger 14 integrally formed with the valve element 12, a core 15 disposed concentrically with the plunger 14, an electromagnetic coil 16 disposed around the plunger 14 and the core 15, a spring 17 disposed between the plunger 14 and the core 15, and a yoke 18 surrounding the electromagnetic coil 16. The core 15 is in the form of a hollow cylinder, and has an adjustment screw 19 screwed therein which adjusts the load of the spring 17. The adjustment screw 19 as well has a hollow cylindrical shape, and forms a bearing that axially movably holds a shaft 20 having a lower end rigidly fixed to the plunger 14. The upper open end of the core 15 is hermetically closed by a ball 21 and a locking screw 22. The solenoid is screwed into the large-diameter hole formed in the top of the body block 2, via a connecting portion 23 thereof.

Now, when the solenoid is deenergized, the plunger 14 is urged by the spring 17 in a direction away from the core 15, and hence the valve element 12 is seated on the valve seat 11, whereby the flow rate control valve is fully closed.

When a predetermined electric current is supplied to the electromagnetic coil 16 of the solenoid, the plunger 14 is attracted to the core 15 against the urging force of the spring 17, which causes the valve element 12 to be lifted from the valve seat 11, and the flow rate control valve is set to a predetermined valve lift dependent on the balance between a solenoid force dependent on the solenoid current and the load of the spring 17. At this time, refrigerant introduced into the high-pressure refrigerant inlet 3 is throttled by a gap between the valve element 12 and the valve seat 11 and then expanded, thereafter being delivered from the low-pressure refrigerant outlet 4 to the evaporator 1.

The effective diameter of the valve seat 11 and that of the piston 13 are approximately equal to each other, and hence the pressure Po of refrigerant supplied to a space between the valve element 12 and the piston 13 has no influence on the motions of the valve element 12 and the piston 13 since a force in a direction of pushing the valve element 12 upward and a force in a direction of pushing the piston 13 downward are approximately equal to each other and canceled out.

Further, pressure Px from the low-pressure refrigerant outlet 4 of the flow rate control valve, which is pressure on the downstream side of the valve element 12, acts on the valve element 12, and pressure from the return passage 8 of refrigerant acts on the lower surface of the piston 13, so that the valve element 12 and the piston 13 is axially moved from respective positions set by the solenoid, in response to the differential pressure between pressure at the inlet of the evaporator 1 and pressure Pe at the outlet of the evaporator 1. For example, when the differential pressure between the pressure at the inlet of the evaporator 1 and the pressure Pe at the outlet of the evaporator 1 increases, the pressure Pe at the outlet of the evaporator 1 acts to move the piston 13 downward, whereby the valve element 12 is moved in a valve-closing direction. This decreases the flow rate of refrigerant, and hence the flow rate control valve acts to reduce the differential pressure. Inversely, when the differential pressure decreases, the flow rate control valve acts to increase the differential pressure. Therefore, the flow rate control valve functions as a constant differential pressure control valve for providing control such that the differential pressure between the pressure at the inlet of the evaporator 1 and the pressure Pe at the outlet of the evaporator 1 is substantially constant. In other words, the flow rate control valve causes refrigerant to flow into the evaporator 1 at a substantially constant flow rate dependent on electric current that energizes the solenoid.

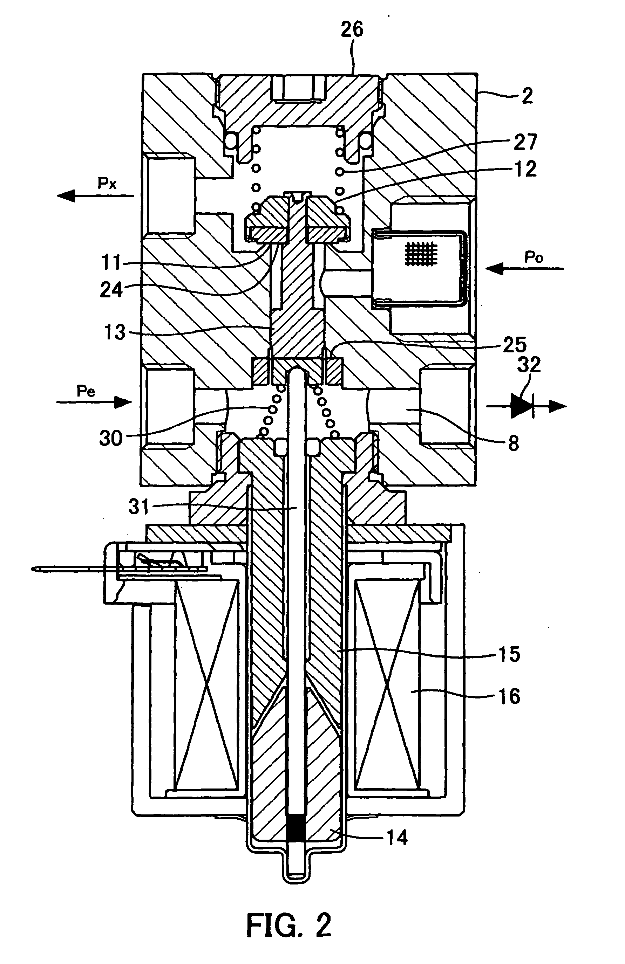

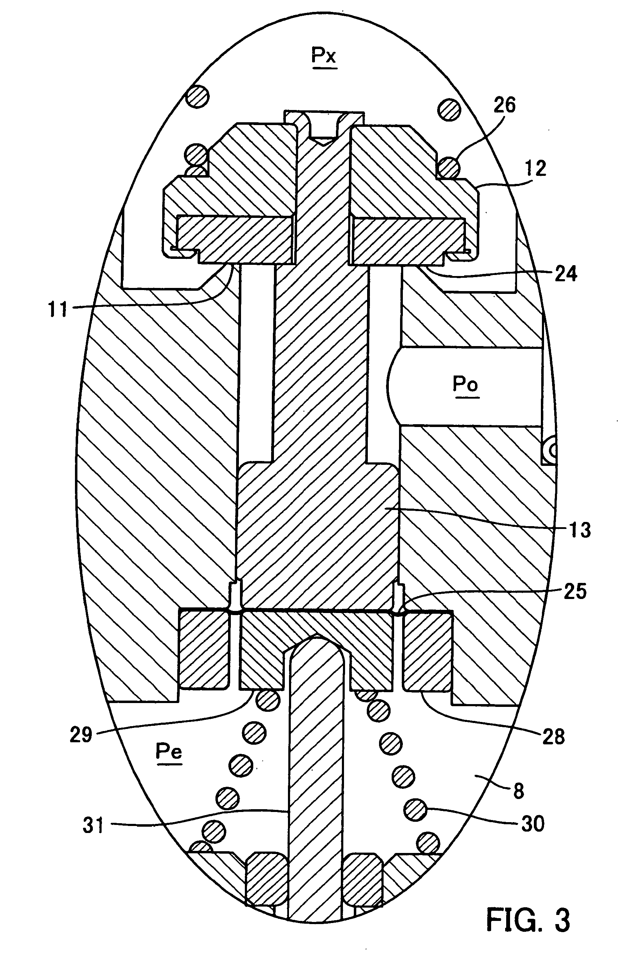

FIG. 2 is a central longitudinal cross-sectional view of the construction of a flow rate control valve according to a second embodiment of the present invention, and FIG. 3 is an expanded cross-sectional view showing essential components of the flow rate control valve according to the second embodiment. It should be noted that component elements in FIGS. 2 and 3 identical or similar to those shown in FIG. 1 are designated by identical reference numerals, and detailed description thereof is omitted.

As distinct from the flow rate control valve according to the first embodiment, the flow rate control valve according to the second embodiment is configured to prevent internal leakage of refrigerant when the flow rate control valve is closed, and reverse the direction of actuation of the valve element 12 by the solenoid.

More specifically, a flexible valve sheet 24 is disposed on a seating surface of the valve element 12 via which the valve element 12 is seated on the valve seat 11 to thereby prevent leakage of refrigerant from a valve section, and a diaphragm 25 is disposed on a surface of the piston 13 at which the pressure Pe from the outlet of the evaporator 1 is received, to thereby substantially completely prevent leakage of refrigerant from the high-pressure refrigerant inlet 3 to the return passage 8 via the sliding portion of the piston 13. A space where the valve element 12 is disposed is closed by an adjustment screw 26 screwed into the body block 2, and a spring 27 for urging the valve element 12 in the valve-closing direction is disposed between the valve element 12 and the adjustment screw 26. The load of the spring 27 can be adjusted by the screwing amount of the adjustment screw 26.

The diaphragm 25 has its periphery brought into intimate contact with the body block 2 by press-fitting a ring member 28 in the body block 2. The diaphragm 25 has an effective diameter approximately equal to the effective diameter of the valve seat 11, and a disk 29 having an end face approximately equal to the lower end face of the piston 13 is contact with the central portion of the diaphragm 25. A spring 30 causes the disk 29 to urge the diaphragm 25 in the valve-opening direction of the valve section.

The solenoid has the core 15 disposed toward the diaphragm 25, and the plunger 14 disposed on a side opposite from the core 15. The plunger 14 is rigidly fitted on the shaft 31. The shaft 31 is disposed in a manner extending through the core 15, and has a foremost end thereof in contact with the disk 29. Therefore, by feeding electric current to the electromagnetic coil 16, the solenoid acts to push the diaphragm 25, the piston 13, and the valve element 12 in the valve-opening direction.

Similarly to the flow rate control valve shown in FIG. 1, the present flow rate control valve is responsive to the differential pressure between the pressure at the inlet of the evaporator 1 and the pressure Pe at the outlet of the evaporator 1 received by the valve element 12 and the diaphragm 25, to control the differential pressure to be substantially constant, to thereby cause refrigerant to flow into the evaporator 1 at a constant flow rate dependent on electric current that energizes the solenoid.

Further, the flow rate control valve is capable of substantially completely preventing internal leakage of refrigerant in a closed state during deenergization of the solenoid, so that e.g. when an inflammable gas, such as HFC-152a, propane, or butane, or carbon dioxide is used as refrigerant, the evaporator 1 can be isolated from a circuit on the condenser side in case the evaporator 1 is damaged, to thereby prevent a fire or oxygen deficiency from being caused by refrigerant having flowed from the evaporator 1 into the vehicle compartment. In this case, it is necessary to isolate the evaporator 1 also from a circuit on the suction side of the compressor by providing a check valve 32 in a manner inserted into a circuit on the outlet side of the evaporator 1.

By providing the check valve 32 in piping between the return refrigerant outlet 6 of the flow rate control valve, which communicates with the return passage 8, and the suction side of the compressor, and using the above-described flow rate control valve capable of preventing internal leakage of refrigerant as an expansion valve, it is possible to isolate the evaporator 1 as a component part of a refrigeration cycle for an automotive air conditioner, which is disposed in the vehicle compartment, from the refrigeration cycle when the automotive air conditioner is not operated. In this case, in stopping the automotive air conditioner, for example, the compressor is allowed to rotate for some time after stoppage of energization of the solenoid, and then stop. With this configuration, refrigerant within the evaporator 1 is collected via the check valve 32, and the collected refrigerant is inhibited from flowing upstream to the evaporator 1 by the check valve 32, and hence the dangerous gas is not released into the vehicle compartment even if the evaporator 1 is damaged e.g. by rupture.

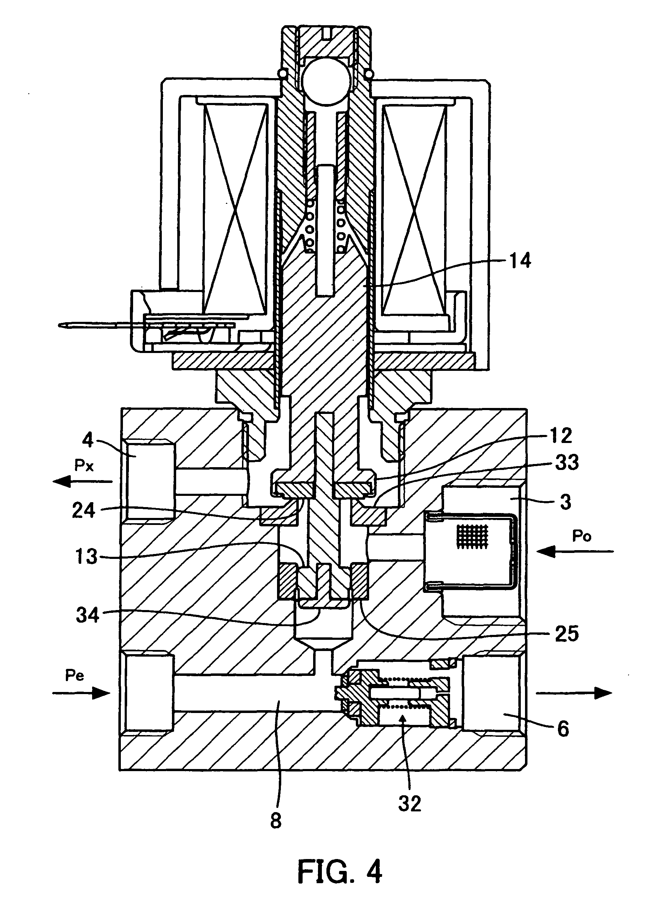

FIG. 4 is a central longitudinal cross-sectional view of the construction of a flow rate control valve according to a third embodiment of the present invention. It should be noted that component elements in FIG. 4 identical or similar to those shown in FIGS. 1 and 2 are designated by identical reference numerals, and detailed description thereof is omitted.

The flow rate control valve according to the third embodiment is formed by providing the flow rate control valve shown in FIG. 1 with the internal leakage-preventing mechanism of the flow rate control valve shown in FIG. 2 and a backflow preventing mechanism for isolating the evaporator 1 from the refrigeration cycle during stoppage of the automotive air conditioner.

More specifically, the flow rate control valve according to the present embodiment is configured such that the valve element 12 is intimately seated on a valve seat-forming member 33 press-fitted in a passage between the high-pressure refrigerant inlet 3 and the low-pressure refrigerant outlet 4 via the valve sheet 24, and a cylinder below the piston 13 is sealed by the diaphragm 25. The diaphragm 25 has a central portion thereof attached to the piston 13 by a holding member 34, and the piston 13 is rigidly fixed to the valve element 12 integrally formed with the plunger 14 of the solenoid. Further, the check valve 32 is interposed in the return passage 8 communicating with the return refrigerant outlet 6, at a location between a branch position at which the return passage 8 branches into a space where the diaphragm 25 receives the pressure Pe from the outlet of the evaporator 1, and the refrigerant outlet 6. The check valve 32 is configured such that a spring provided toward the return refrigerant outlet 6 urges the valve element, and when the differential pressure between the suction pressure of the compressor and the pressure Pe at the outlet of the evaporator 1 becomes equal to or higher than a predetermined value, the check valve 32 opens to allow refrigerant to flow from the evaporator 1 to the compressor.

During operation of the automotive air conditioner, the flow rate control valve controls the differential pressure across the evaporator 1 such that it is substantially constant, to thereby cause refrigerant to flow into the evaporator 1 at a constant flow rate dependent on electric current that energizes the solenoid.

In stopping the automotive air conditioner, energization of the solenoid is stopped to cause the valve element 12 to be seated on the valve seat-forming member 33, whereby the evaporator 1 is isolated from the condenser. Then, the compressor is caused to be continuously be rotated to thereby collect refrigerant from the evaporator 1 via the check valve 32, whereafter the compressor is stopped. Thus, the check valve 32 isolates the evaporator 1 from the suction side of the compressor. At this time, since there is no refrigerant in the evaporator 1, it is possible to prevent a dangerous gas from leaking into the vehicle compartment even if the evaporator 1 is damaged during stoppage of the automotive air conditioner.

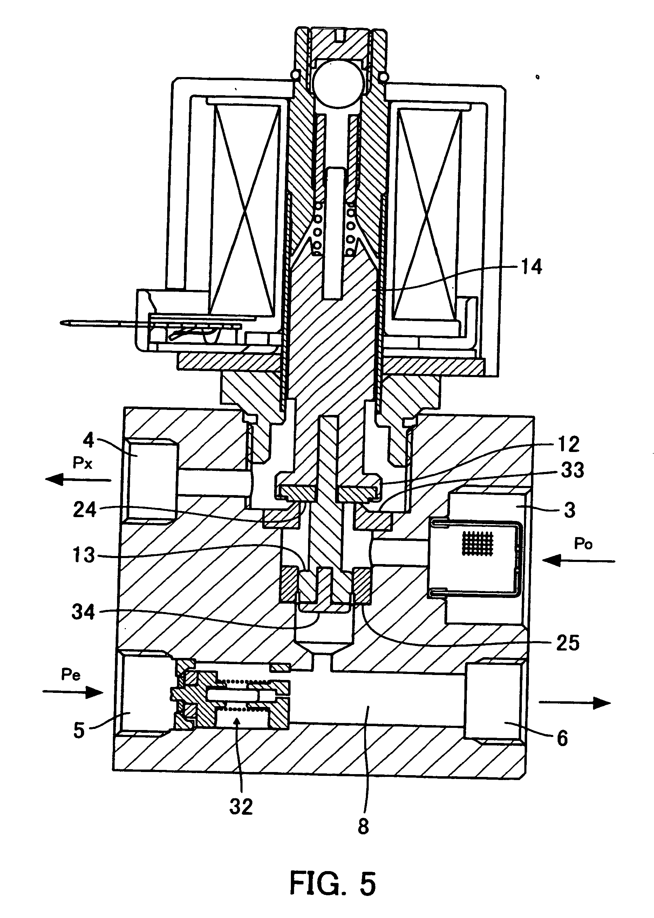

FIG. 5 is a central longitudinal cross-sectional view of the construction of a flow rate control valve according to a fourth embodiment of the present invention. It should be noted that component elements in FIG. 5 identical or similar to those shown in FIG. 4 are designated by identical reference numerals, and detailed description thereof is omitted.

In the flow rate control valve according to the fourth embodiment, the check valve 32 disposed in the return passage 8 is moved from the location toward the return refrigerant outlet 6 shown in FIG. 4 to a location toward the return refrigerant inlet 5.

Therefore, the flow rate control valve is responsive to the differential pressure obtained by adding the differential pressure across the evaporator 1 and the differential pressure across the check valve 32, received by the valve element 12 and the diaphragm 25, to control the differential pressure to be substantially constant, to thereby cause refrigerant to flow into the evaporator 1 at a constant flow rate dependent on electric current that energizes the solenoid.

It should be noted although in the above-described embodiments, the flow rate control valve is configured such that the constant differential pressure control valve automatically closes when the solenoid is deenergized, the flow rate control valve may be configured such that the constant differential pressure control valve automatically closes when the solenoid is energized.

As described hereinabove, in the present invention, the evaporator is regarded as a restriction passage and the flow rate control valve is configured to include the constant differential pressure control valve for controlling the differential pressure across the evaporator to be substantially constant. This makes it unnecessary to form a restriction passage in the flow rate control valve, and hence the construction of the flow rate control valve can be simplified, which makes it possible to provide a flow rate control valve that is manufactured at low cost.

## Claims

1. Expansion device for a refrigerating cycle of an automotive air conditioner, for controlling a substantially constant flow rate of a refrigerant compressed and discharged by a compressor while the refrigerant is throttled and expanded by passing through a flow rate control valve before being delivered to an evaporator (1) of the refrigeration cycle, the expansion device comprising a solenoid (18) for driving a valve element (12) when being energised in relation to a valve seat (11) of the flow rate control valve, **characterised in that**
the flow rate control valve controls a differential pressure between an evaporator inlet pressure (Px) and an evaporator outlet pressure (Pe) occurring by the passage of the refrigerant through the evaporator (1) such that the value of the differential pressure remains substantially constant,
that the valve element (12) is urged by the evaporator inlet pressure (Px) in valve closing direction,
that a pressure-sensing member (13) is coupled to the valve element (12) such that the valve element (12) and the pressure-sensing member (13) move in unison with each other, and is urged by the evaporator outlet pressure (Pe) in valve opening direction,
that the solenoid (18) when energised urges the valve element (12) and the pressure-sensing member (13) in valve opening direction,
that a pressure effective diameter of the valve element (12) and a pressure effective diameter of the pressure-sensing member (13) are approximately equal to each other,
that a return passage (8) is provided in the flow control valve for communicating between the evaporator outlet and a suction side of the compressor, and that the valve element (12) is held in a closed state on the valve seat (11) when the solenoid (18) is de-energised.

2. The expansion device according to claim 1, **characterised in that** a valve sheet (24) is provided on the valve element (12) for sealing the valve seat (11) when the flow rate control valve is in the closed state, and that a diaphragm (25) is provided between the return passage (8) and the pressure-sensing member (13) for sealing a sliding portion of the pressure-sensing member (13).

3. The expansion device according to claim 1, **characterised in that** a check valve (32) is provided within the return passage (8) for preventing a refrigerant flow from the suction side of the compressor to the evaporator outlet.

4. The expansion device according to claim 3, **characterised in that** the check valve (32) is disposed in the return passage (8) either adjacent to a refrigerant outlet (6) which is connected by piping to the suction side of the compressor, or adjacent to a refrigerant inlet(5) which is connected by piping to the evaporator outlet.

## Patentansprüche

1. Expansionsvorrichtung für einen Kühlkreis einer Automobil-Klimaanlage zum Regeln einer substantiell konstanten Strömungsrate eines Kältemittels, das von einem Kompressor komprimiert und abgegeben wird, und zwar während das Kältemittel beim Durchgang durch ein Durchflussregelventil gedrosselt und expandiert wird, ehe es einem Verdampfer (1) des Kühlreises zugeführt wird, wobei die Expansionsvorrichtung einen Magneten (18) aufweist, der in bestromtem Zustand ein Ventilelement (12) in Relation zu einem Ventilsitz (11) des Durchflussregelventils antreibt, **dadurch gekennzeichnet, dass**
das Durchflussregelventil einen Differentialdruck zwischen einem Verdampfereinlassdruck (Px) und einem Verdampferauslassdruck (Pe) regelt, wie verursacht durch den Durchgang des Kältemittels durch den Verdampfer (1) derart, dass der Wert des Differentialdrucks substantiell konstant bleibt,
dass das Ventilelement (12) in Ventilschließrichtung durch den Verdampfereinlassdruck (Px) beaufschlagt ist,
dass mit dem Ventilelement (12) ein Druckfühlglied (13) derart gekoppelt ist, dass sich das Ventilelement (12) und das Druckfühlglied (13) gemeinsam bewegen, wobei das Druckfühlglied (13) in Ventilöffnungsrichtung durch den Verdampferauslassdruck (Pe) beaufschlagt wird,
dass der bestromte Magnet (18) das Ventilelement (12) und das Druckfühlglied (13) in Ventilöffnungsrichtung beaufschlagt,
dass ein druckeffektiver Durchmesser des Ventilelementes (12) und ein druckeffektiver Durchmesser des Druckfühlglieds (13) einander annähernd gleich sind,
dass in dem Durchflussregelventil zur Kommunikation zwischen dem Verdampferauslass und einer Ansaugseite des Kompressors eine Rückführpassage (18) vorgesehen ist, und
dass das Ventilelement (12) bei nicht bestromtem Magneten (18) in einem geschlossenen Zustand an dem Ventilsitz (11) gehalten wird.

2. Expansionsvorrichtung nach Anspruch 1, **dadurch gekennzeichnet, dass** zum Abdichten des Ventilsitzes (11) in dem geschlossenen Zustand des Durchflussregelventils an dem Ventilelement (12) ein Ventilring (24) vorgesehen ist, und dass zwischen der Rückführpassage (8) und dem Druckfühlglied (13) zum Abdichten eines Gleitbereiches des Druckfühlgliedes (13) eine Membrane (25) vorgesehen ist.

3. Expansionsvorrichtung nach Anspruch 1, **dadurch gekennzeichnet, dass** in der Rückführpassage (18) ein Rückschlagventil (32) angeordnet ist, um einen Kältemittelstrom von der Ansaugseite des Kompressors zum Verdampferauslaß zu verhindern.

4. Expansionsvorrichtung nach Anspruch 3, **dadurch gekennzeichnet, dass** das Rückschlagventil (32) der Rückführpassage (8) entweder benachbart zu einem Kältemittelauslass (6) angeordnet ist, der mit einer Verrohrung mit der Ansaugseite des Kompressors verbunden ist, oder benachbart zu einem Kältemitteleinlass, der mit dem Verdampferauslass durch eine Verrohrung verbunden ist.

## Revendications

1. Dispositif de détente pour un cycle de réfrigération d'un climatiseur d'air pour automobile, destiné à commander un débit sensiblement constant d'un réfrigérant comprimé et évacué par un compresseur, le réfrigérant s'écoule, avec un effet d'étranglement, et est détendu en traversant une vanne de commande de débit avant d'être refoulé à un évaporateur (1) du cycle de réfrigération, le dispositif de détente comprenant un solénoïde (18) pour piloter un élément de vanne (12) lorsqu'il est activé par rapport à un siège de vanne (11) de la vanne de commande de débit,
**caractérisé en ce que**
la vanne de commande de débit commande une pression différentielle entre une pression d'entrée d'évaporateur (Px) et une pression de sortie d'évaporateur (Pe), qui est provoquée par le passage du réfrigérant à travers l'évaporateur (1), de telle manière que la pression différentielle demeure sensiblement constante,
**en ce que** l'élément de vanne (12) est poussé par la pression d'entrée d'évaporateur (Px) selon la direction de fermeture de vanne,
**en ce qu'**un élément de détection de pression (13) est couplé à l'élément de vanne (12), de telle manière que l'élément de vanne (12) et l'élément de détection de pression (13) se déplacent à l'unisson l'un avec l'autre, et est poussé par la pression de sortie d'évaporateur (Pe) selon la direction d'ouverture de vanne,
**en ce que** le solénoïde (18), lorsqu'il est activé, pousse l'élément de vanne (12) et l'élément de détection de pression (13) selon la direction d'ouverture de vanne,
**en ce qu'**un diamètre effectif de pression de l'élément de vanne (12) et un diamètre effectif de pression de l'élément de détection de pression (13) sont approximativement égaux l'un avec l'autre,
**en ce qu'**un passage de retour (8) est ménagé dans la vanne de commande de débit pour mettre en communication la sortie d'évaporateur et un côté d'aspiration du compresseur, et **en ce que** l'élément de vanne (12) est tenu dans un état fermé sur le siège de vanne (11) lorsque le solénoïde (18) est désactivé.

2. Dispositif de détente selon la revendication 1, **caractérisé en ce qu'**une plaque de vanne (24) est disposée sur l'élément de vanne (12) pour fermer hermétiquement le siège de vanne (11) lorsque la vanne de commande de débit se trouve dans l'état fermé, et **en ce qu'**un diaphragme (25) est disposé entre le passage de retour (8) et l'élément de détection de pression (13) pour fermer hermétiquement une partie de coulissement de l'élément de détection de pression (13).

3. Dispositif de détente selon la revendication 1, **caractérisé en ce qu'**un clapet (32) est disposé au sein du passage de retour (8) pour empêcher un écoulement du réfrigérant du côté d'aspiration du compresseur vers la sortie d'évaporateur.

4. Dispositif de détente selon la revendication 3, **caractérisé en ce que** le clapet (32) est disposé au sein du passage de retour (8) soit en étant adjacent à une sortie de réfrigérant (6) qui est raccordée par canalisation au côté d'aspiration du compresseur, soit en étant adjacent à une entrée de réfrigérant (5) qui est raccordée par canalisation à la sortie d'évaporateur.
